## Europäisches Patentamt
## European Patent Office
## Office européen des brevets

(19)

(11) Veröffentlichungsnummer: **0 334 969**
A1

(12) **EUROPÄISCHE PATENTANMELDUNG**
### veröffentlicht nach Art. 158 Abs. 3 EPÜ

(21) Anmeldenummer: 88909007.2

(22) Anmeldetag: 09.09.88

(86) Internationale Anmeldenummer:
PCT/SU88/00178

(87) Internationale Veröffentlichungsnummer:
WO 89/02333 (23.03.89 89/07)

(51) Int. Cl.⁴: **B23K 11/04**

(30) Priorität: 15.09.87 SU 4305525

(43) Veröffentlichungstag der Anmeldung:
**04.10.89 Bulletin 89/40**

(84) Benannte Vertragsstaaten:
**AT CH DE FR LI SE**

(71) Anmelder: **INSTITUT ELEKTROSVARKI IMENI E.O.PATONA AKADEMII NAUK UKRAINSKOI SSR**
**ul. Bozhenko, 11**
**Kiev, 252650(SU)**

(72) Erfinder: **KUCHUK-YATSENKO, Sergei Ivanovich**
**ul. P.Osipenko, 17-18**
**Kiev, 252025(SU)**
Erfinder: **BOGORSKY, Mikhail Vladimirovich**
**ul. Ozernaya, 30-120**
**Kiev, 252209(SU)**
Erfinder: **BELYAEV, Daniil Ivanovich**
**ul. Cheshskaya, 4-141**
**Kiev, 252042(SU)**
Erfinder: **BONDARUK, Andrei Vsevolodovich**
**bulvar Koltsova, 17g-26**
**Kiev, 252194(SU)**
Erfinder: **GORONKOV, Nikolai Dmitrievich**
**ul. Chelyabinskaya, 11-38**
**Kiev, 252095(SU)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) **VERFAHREN ZUR ABSCHMELZSTUMPFSCHWEISSUNG EINER GRUPPE VON GLEICHEN PAARWEISE ZU VERSCHWEISSENDEN WERKSTÜCKEN**

(57) Das Verfahren zur Abschmelzstumpfschweißung einer Gruppe von gleichen paarweise zu verschweißenden Werkstücken besteht darin, daß beim Abschmelzen das Zusammenführen und Auseinanderrücken der zu verschweißenden Werkstücke (1, 2) je nach der Resultante des Widerstandes, die sich beim Vergleich des Istwertes des Widerstandes zwischen den zu verschweißenden Werkstücken (1, 2) mit dem aktualisierten Wert des beim Stauchen jedes vorhergehenden Paares der Werkstücke (1, 2) und nach Erreichen eines konstanten Wertes durch den Schweißstrom ermittelten Kurzschlußwiderstandes des Schweißstromkreises ergeben hat, vorgenommen wird.

# VERFAHREN ZUR ABSCHMELZSTUMPFSCHWEISSUNG EINER GRUPPE VON GLEICHEN PAARWEISE ZU VERSCHWEISSENDEN WERKSTÜCKEN

## Anwendungsgebiet

Die Erfindung betrifft das Schweißen, insbesondere ein Verfahren zur Abschmelzstumpfschweißung einer Gruppe von gleichen paarweise zu verschweißenden Werkstücken, welche vorzugsweise große zu verschweißende Querschnitte aufweisen. Das erfindungsgemäße Verfahren ist beim Schweißen einer Gruppe von Werkstücken gleicher Baugröße verwendbar.

Als eine der Einflußgrößen, welche zu einer wirksamen Erhitzung der Werkstücke während der Abschmelzstumpfschweißung beitragen, gilt ein stabiler Ablauf des Abschmelzvorganges. Als stabil wird das Abschmelzen angenommen, bei welchem keine Kurzschlüsse an den Stoßflächen der Werkstücke auftreten und der Strom im Schweißstromkreis ohne Unterbrechungen durchfließt.

Bei der Abschmelzstumpfschweißung der Werkstücke mit großen Querschnitten bietet sich keine Möglichkeit, ein stabiles Abschmelzen bei einem strikt vorgegebenen Programm für die Änderung der Vorschubgeschwindigkeit eines der Werkstücke zu gewährleisten.

## Bisheriger Stand der Technik

Es ist bereits ein Verfahren zur Abschmelzstumpfschweißung bekannt (S.I.Kutchuk-Jatsenko et al. "Die Abschmelzstumpfschweissung bei ununterbrochenem Abschmelzen", 1976, Verlag "Naukova dumka" (Kiev), S. 59 bis 62), bei welchem die Schweißstromgröße überwacht und in Abhängigkeit davon die Geschwindigkeit der Zusammenführung der zu verschweißenden Werkstücke verändert wird. Durch die Anwendung dieses Verfahrens werden dauernde Kurzschlüsse bei den zu schweißenden Werkstücken vermieden.

Es ist ein weiteres Verfahren zur Abschmelzstumpfschweißung bekannt (SU, A, 1065121), bei dem im Abschmelzvorgang der Widerstand zwischen den zu schweißenden Teilen ermittelt, das augenblickliche Verhältnis des zwischen den zu schweißenden Teilen herrschenden Widerstandes zum Kurzschlußwiderstand des Schweißstromkreises überwacht wird und je nach der Größe dieses Verhältnisses die zu schweißenden Teile zusammengeführt oder auseinandergerückt werden.

Durch die Anwendung des bekannten Verfahrens steigert sich die Ergiebigkeit des Schweißvorganges dank einer Verkürzung der für die ausreichende Erhitzung der Stoßflächen der Teile notwengige Zeit. Dies wird dadurch erreicht, daß bei dem vorliegenden Verfahren die Möglichkeit gegeben ist, das eventuelle Auftreten von Unterbrechungen des Schweißstromdurchflusses sowie von Kurzschlüssen der Teile im Abschmelzvorgang dank der Einhaltung des Widerstandes zwischen den zu schweißenden Teilen innerhalb der Sollwerte zu schmälern.

Dennoch bleibt bei der Durchführung des bekannten Verfahrens eine Änderung des Kurzschlußwiderstandes des Schweißstromkreises während der Schweißung einer Gruppe von Teilen unberücksichtigt. Beim Betrieb des Schweißstromkreises ändert sich der Widerstand dessen Kurzschlusses. Die Abweichung des Istwertes für den Kurzschlußwiderstand des Schweißstromkreises von dem Kennkartenwert kann sich auf 20 bis $30 \bullet 10^{-6} \, \Omega$ belaufen. Auf die Änderung dieses Wertes wirkt eine Reihe von Einflußgrößen.

Erstens findet beim Schweißen eine Erwärmung der Spannbacken und der Stromschienen des Schweißstromkreises statt, was einen erhöhten Kurzschlußwiderstand des · Schweißstromkreises nach sich zieht.

Zweitens erfolgt beim Schweißen ein Anhaften von Metallspritzern an den Teilen des Schweißstromkreises, die innerhalb des durch diesen Schweißstromkreis umgebenen Raumes liegen, sowie an den Teilen des Schweißstromkrei ses selbst, was ebenfalls einen Anstieg des Kurzschlußwiderstandes des Schweißstromkreises zur Folge hat.

Drittens wird die Größe des Kurzschlußwiderstandes des Schweißstromkreises durch eine Änderung von Übergangswiderständen der stromzuführenden Teile des Schweißstromkreises beeinflußt.

Somit ist es erforderlich, den Zahlenwert des Kurzschlußwiderstandes des Schweißstromkreises, über den die Regelung des Schweißvorganges vorgenommen wird, zu überwachen und zu aktualisieren, damit der Abschmelzvorgang unter hoher Wirksamkeit abläuft. Das bekannte Verfahren läßt diese Änderung außer acht, indem als Sollwert der Kennkartenwert bzw. die Größe des Kurzschlußwiderstandes des Schweißstromkreises, die bei der Wartung ermittelt wurde, fungiert. Das beeinträchtigt die Abschmelzstabilität und folglich die wirksame Erhitzung der Teile, weshalb letztendlich die Schweißzeit zunimmt.

## Offenbarung der Erfindung

Der Erfindung wurde die Aufgabe zugrunde gelegt, ein Verfahren zur Abschmelzstumpfschweißung einer Gruppe von gleichen paarweise zu verschweißenden Werkstücken zu schaffen, welches es ermöglicht, Änderungen der elektrischen Kenngrößen des Schweißstromkreises während dessen Betriebs zu berücksichtigen und Korrekturen der Schweißdaten bei der Schweißung einer Gruppe von Werkstücken zwecks Stabilitätserhöhung des Abschmelzvorganges beim Abschmelzen der zu verschweißenden Werkstücke vorzunehmen, wodurch eine bessere Wirksamkeit bei der Erhitzung der zu verschweißenden Werkstücke und eine kürzere Schweißdauer erzielt werden.

Das Wesen der Erfindung besteht darin, daß bei einem Verfahren zur Abschmelzstumpfschweißung einer Gruppe von gleichen paarweise zu verschweißenden Werkstücken, bei welchem ein Paar der Werkstücke in einer Schweißmaschine unter Bildung eines Schweißstromkreises angeordnet, für das erste Paar der zu verschweißenden Werkstücke aus der Gruppe ein Sollwert für den Kurzschlußwiderstand des Schweißstromkreises vorgegeben, der Schweißstromkreis an eine Stromquelle angeschaltet und das Paar der zu verschweißenden Werkstücke abgeschmolzen, im Abschmelzvorgang des ersten Paares sowie der weiteren Paare der zu verschweißenden Werkstücke der Widerstand zwischen den zu verschweißenden Werkstücken ununterbrochen überwacht, der für das erste Paar der zu verschweißenden Werkstücke geltende Istwert des Widerstandes zwischen den zu verschweißenden Werkstücken mit dem ursprünglich vorgegebenen Sollwert des Kurzschlußwiderstandes des Schweißstromkreises zur Aufrechterhaltung des gewünschten Widerstandes zwischen den zu verschweißenden Werkstücken verglichen, im Abschmelzvorgang das erste Paar der zu verschweißenden Werkstücke je nach der Resultante des Widerstandes, die sich beim Vergleich des Istwertes des Widerstandes zwischen den zu verschweißenden Werkstücken mit dem ursprünglichen Sollwert des Kurzschlußwiderstandes des Schweißstromkreises ergibt, zusammengeführt und auseinandergerückt und das Stauchen der zu verschweißenden Werkstücke vorgenommen wird, gemäß der Erfindung die Schweißstromgröße im Stauchvorgang beim Verschweißen eines jeden Paares der Werkstücke überwacht, beim Erreichen einer konstanten Größe durch den Schweißstrom ausgehend von dieser Stromgröße sowie der gleichzeitig mit dem Schweißstrom gemessenen Spannung der Kurzschlußwiderstand des Schweißstromkreises aktualisiert, beim Verschweißen eines nachfolgenden Paares der zu verschweißenden Werkstücke der Istwert des Widerstandes zwischen den zu verschweißenden Werkstücken mit dem beim Stauchen jedes vorhergehenden Werkstückpaares aktualisierten Kurzschlußwiderstand des Schweißstromkreises verglichen, beim Abschmelzen eines jeden Paares der zu verschweißenden Werkstücke das Zusammenführen und Auseinanderrücken der zu verschweißenden Werkstücke je nach der Resultante des Widerstandes, die sich beim Vergleich des Istwertes des Widerstandes zwischen den zu verschweißenden Werkstücken mit dem in jedem vorhergehenden Schweißzyklus aktualisierten Kurzschlußwiderstand des Schweißstromkreises ergibt, vorgenommen wird.

Die Erfindung gestattet es, die Leistung von Schweißanlagen zu steigern und die Möglichkeiten beim Schweißen zu erweitern, denn erfindungsgemäß können Werkstücke mit größeren Querschnitten zusammengeschweißt werden als beim Schweißen unter Verwendung von ähnlichen bestehenden Schweißanlagen.

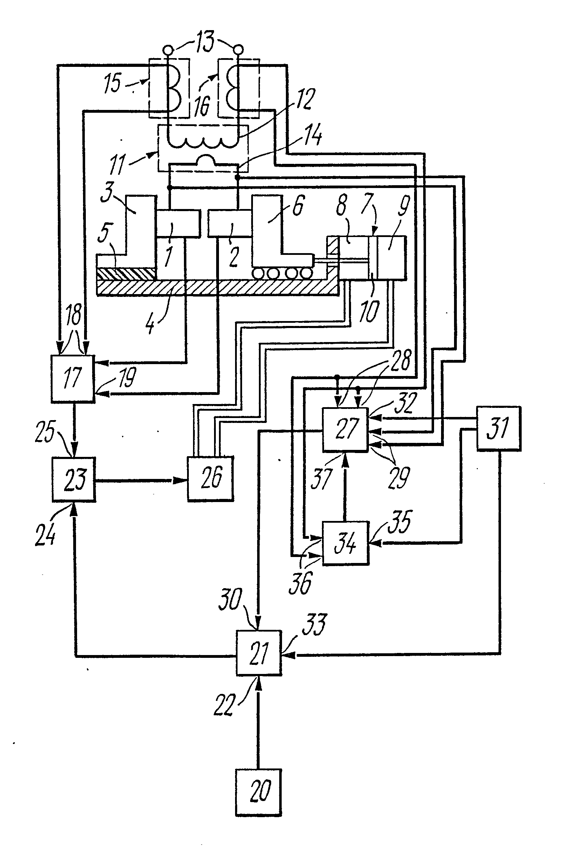

Kurze Beschreibung der Zeichnung

Nachstehend wird die Erfindung anhand eines konkreten Beispiels, durch welches die Durchführbarkeit des erfindungsgemäßen Verfahrens nachgewiesen wird, sowie einer beigefügten Zeichnung mit einem darin dargelegten Funktionsschema für eine Vorrichtung zur Durchführung des erfindungsgemäßen Verfahrens zur Abschmelzstumpfschweißung einer Gruppe von gleichen paarweise zu verschweißenden Werkstücken näher erläutert.

Bevorzugte Ausführungsform der Erfindung

Das Wesen des Verfahrens zeigt sich darin, daß das Zusammenführen und das Auseinanderrücken der Werkstücke beim Abschmelzen in Abhängigkeit von der Größe des resultierenden Widerstandes vorgenommen werden, der beim Vergleich des Istwertes für den Gesamtwiderstand der Elementarkontakte an den Stoßflächen der zu verschweißenden Werkstücke mit dem präzisierten Kurzschlußwiderstand des Schweißstromkreises festgestellt wird. Unter Berücksichtigung dessen, daß beim Betrieb des Schweißstromkreises sich dessen Kurzschlußwiderstand verändert und daß der Istwert des Kurzschlußwiderstand vom Kennkartenwiderstand um 20 bis $30 \bullet 10^{-6} \, \Omega$ abweichen kann, ist es sinnvoll, den Kurzschlußwiderstand des Schweißstrom kreises während der Schweißung des vorhergehenden Werkstückpaares beim Stauchen nach Erreichung seiner Konstante durch den Schweißstrom nach gfolgender Formel

$$Z = \frac{U}{I}$$

zu bestimmen, wobei bedeutet:

I einen Schweißstrom beim Stauchen nach Erreichung seiner Konstante und

U eine Schweißspannung beim Stauchen, gemessen gleichzeitig mit dem Schweißstrom.

Dank diesem technischen Vorgehen werden Zustandsänderungen des Schweißstromkreises während dessen Betriebs erfaßt. Berücksichtigt werden weiter der Einfluß der Erwärmung der Spannbacken und der Stromschienen auf den Kurzschlußwiderstand des Schweißstromkreises, durch welche der Kurzschlußwiderstand dieses Kreises anwächst, sowie der Anhaftung von Metallspritzern an den Maschinenteilen im durch den Schweißstromkreis umgrenzten Raum und an den Teilen des Schweißstromkreises selbst, wodurch sich der Kurzschlußwiderstand des Schweißstromkreises ebenfalls erhöht, sowie Änderungen der Übergangswiderstände der stromführenden Teile des Schweißstromkreises.

Bei jeder Schweißung der Stoßflächen der Werkstücke aus deren vorliegender Gruppe wird eine präzisierte Größe des Kurzschlußwiderstandes des Schweißstromkreises ermittelt, und mit Rücksicht auf diese Größe erfolgt die Steuerung des Schweißvorgangs beim Schweißen eines folgenden Werkstückpaares. Als Folge hiervon wird der Abschmelzvorgang stabiler und somit werden eine Verbesserung der Energiekennwerte des Schweßvorgangs und eine Verkürzung der Schweißdauer erzielt.

Die Vorrichtung zur Durchführung des erfindungsgemäßen Verfahrens zum Abschmelzstumpfschweißen einer Gruppe von gleichen paarweise zu verschweißenden Werkstücken umfaßt zu verschweißende Werkstücke 1, 2, eine Säule 3, die mit einer Grundplatte 4 über eine Zwischenlage 5 fest verbunden ist, und eine Säule 6, welche mit der Grundplatte 4 derart verbunden ist, daß sie entlang der Längsachse der zu verschweißenden Werkstücke 1, 2 verlagerbar ist.

Die Säule 3 und 6 sorgen für das Festhalten der zu verschweißenden Werkstücke 1, 2 sowie für die Unterbringung der Elemente der Schweißstromkreises.

Die Vorrichtung weist fernerhin einen ebenfalls auf der Grundplatte 4 aufgestellten Hydraulikzylinder 7 zum Anschmelzen und Stauchen mit Räumen 8, 9 auf, dessen Kolben 10 mit der Säule 6 starr verbunden ist. Der Hydraulikzylinder 7 zum Abschmelzen und Stauchen sorgt für das Zusammenführen und das Auseinanderrücken der zu verschweißenden Werkstücke 1, 2.

Die Vorrichtung hat einen Schweißtransformator 11, dessen Primärwicklung 12 an eine Stromquelle 13 und dessen Sekundärwicklung 14 an die zu verschweißenden Werkstücke 1, 2 unter Bildung dadurch eines Schweißstromkreises angeschlossen ist.

Die Grundplatte 4 trägt die Elemente einer Schweißmaschine. Die dielektrische Zwischenlage 5 verhindert einen Kurzschluß des Schweißstromkreises über die Grundplatte 4.

Der Transformator 11 sorgt für die Umwandlung der Spannung der Stromquelle 13 in eine Schweißspannung.

Darüber hinaus verfügt die Vorrichtung über Stromwandler 15, 16, die an der Primärwicklung 12 des Schweißtransformators 11 angeordnet sind. Der Stromwandler 15 dient für die Kontrolle über die Größe des in den zu verschweißenden Werkstücken beim Abschmelzen fließenden Schweißstromes. Der Stromwandler 16 sorgt für die Kontrolle über die Größe des in den zu verschweißenden Werkstücken 1, 2 beim Stauchen fließenden Schweißstromes.

Die Vorrichtung ist weiterhin mit einer Divisionseinheit 17 bestückt, die für die Erzeugung eines Signals dient, welches proportional zum Quotienten beim Dividieren der Größe der zwischen den zu verschweißenden Werkstücken auftretenden Spannung durch den Schweißstrom beim Abschmelzen ist; die Eingänge 18 der Divisionseinheit 17 sind an den Stromwandler 15 und die Eingänge 19 an die zu verschweißenden Werkstücke 1, 2 geschaltet.

Die Vorrichtung zur Durchführung des Verfahrens zur Abschmelzstumpfschweißung einer Gruppe von gleichen paarweise zu verschweißenden Werkstücken umfaßt außerdem eine Einheit 20 für die manuelle Eingabe von Daten über den Kurzschlußwiderstand des Schweißstromkreises, die für die Vorgabe des jeweiligen Kurzschlußwiderstandes des Schweißstromkreises während der Schweißung eines ersten Paares der Werkstücke 1 und 2 verantwortlich ist, eine Speichereinheit 21 zur Speicherung von Informationen über den Kurzschlußwiderstand des Schweißstromkreises, deren Eingang 22 mit dem Ausgang der Einheit 20 verbunden ist, eine Vergleichseinheit 23 zum Vergleich des dem Kurzschlußwiderstand des Schweißstromkreises proportionalen Signales mit dem dem Istwert des Widerstandes zwischen den zu verschweißenden Werkstücken 1 und beim Abschmelzen propotionalen Signalen, deren Eingang 24 an den Ausgang der Speichereinheit 21 und deren Eingang 25 an den Ausgang der Divisionseinheit 17 angeschlossen ist, einen elektrohydraulischen Verstärker 26, der für die Steuerung der Betriebsflüssigkeitsstromes im Hydrauliksystem der Schweißmaschine proportional der Größe der elektrischen Eingangssteuersignals und als Folge hiervon für die Versetzung der Säule 6 dient, und dessen Ausgänge mit den Räumen 8 und 9 der Hydraulikzylinder verbunden sind und dessen Eingang am Ausgang der Vergleichseinheit 23 liegt, eine Divisionseinheit 27, die für die Ermittlung des Quotienten durch das Dividieren der an den zu verschweißenden Werkstücken auftretenden Spannung durch den Schweißstrom beim Stauchen, d.h. für die Erzeugung eines dem präzisierten Kurzschlußwiderstand des Schweißstromkreises proportionalen Signals vorgesehen ist, bei welcher der Eingänge 28 an den Stromwandler 16, die Eingänge 29 an die Sekundärwicklung 14 des Schweißtransformators 11 geschaltet sind und der Ausgang mit dem Eingang 30 der Speichereinheit 21 in Verbindung steht eine Befehleinheit 31, die ein Relais darstellt und Befehle der Divisionseinheit 27 und der Speichereinheit 21 erteilt, wobei der erste Ausgang der Einheit 31 am Eingang 32 der Divisionseinheit 27 und der zweite Eingang am Eingang 33 der Speichereinheit 21 liegt, und eine Differenziereinheit 34, die' für für Ermittlung einer in der Zeit genommenen Ableitung der Schweißstromgröße beim Stauchen und bei der Erteilung des Befehls zur Einschaltung der Divisionseinheit 27, wo diese Abteilung gleich Null wird, vorgesehen ist und bei der der Eingang 35 mit dem dritten Ausgang der Befehlseinheit 31 verbunden ist, die Eingänge 36 an den Stromwandler 16 angekoppelt sind und der Ausgang mit dem Eingang 37 der Divisionseinheit 27 in Verbindung steht.

Die Einheiten 17, 20, 21, 23, 27, 31 und 34 sowie der elektrohydraulische Verstärker 26 sind nach aus Nachschlagebüchern bekannten Schemata ausgebildet.

Die Vorrichtung zur Durchführung des Verfahrens zur Abschmelzstumpfschweißung einer Gruppe von gleichen paarweise zu verschweißenden Werkstücken wirkt wie folgt.

Vor der Schweißung einer Gruppe der Werkstücke 1, 2 wird mit Hilfe der manuellen Eingabeeinheit 20 in die Speichereinheit 21 über deren Eingang 22 vor dem Abschmelzvorgang für das erste Paar der zu verschweißenden Werkstücke 1, 2 zunächst einmal ein Wert des Kurzschlußwiderstandes des Schweißstromkreises eingegeben. Als solcher Wert kann der Kennkartenwert des Kurzschlußwiderstandes des Schweißstromkreises oder ein bei der technischen Wartung der Schweißmaschine ermittelter Wert benutzt werden.

Am Schweißanfang wird durch die Speichereinheit 21 über die Vergleichsenheit 23 an den Eingang des elektrohydraulischen Verstärkers 26 ein Signal für das Zusammenführen der zu verschweißenden Werkstücke 1, 2 gegeben. Gleichzeitig wird an die Werstücke 1, 2 über die Sekundärwiklung 14 des Schweißtransformators 11 eine Schweißspannung angelegt. Hierbei wird von dem elektrohydraulischen Verstärker 26 dem Hydraulikzylinderraum 9 des Hydraulikzylinders 7 für die Abschmelzung und Stauchung ein Betriebsflüssigkeitsstrom zugeleitet, und die zu verschweißenden Werkstücke 1, 2 beginnen sich anzunähern.

Nach der Berührung der zu verschweißenden Werkstücke 1, 2 mit ihren Stoßstellen beginnt im Schweißstromkreis ein Schweißstrom zu fließen. Hierbei entsteht an Ausgang des Stromwandlers 15 ein dem Schweißstrom proportionales Signal. welches den Eingängen 18 der Divisionseinheit 17 zugeleitet wird. An die Eingänge 19 der Divisionseinheit 17 wird die Spannung der zu verschweißenden Werkstücke 1, 2 angelegt.

Innerhalb der Divisionseinheit 17 erfolgt die Ermittlung eines Signals, das dem Quotienten beim Dividieren der Spannungsgröße der zu verschweißenden Werkstücke 1, 2 durch den Wert des Schweißstromes beim Abschmelzen proportional, also dem Gesamtwiderstand der Elementarkontakte an den Stoßstellen der zu verschweißenden Werkstücke 1, 2 proportional ist. Dieses Signal gelangt an den Eingang der Vergleichseinheit 23, gleichzeitig damit gelangt an den Eingang 24 der Vergleichsenheit 23 ein Signal, das dem ursprünglichen Sollwert des Kurzschlußwiderstandes des Schweßstromkreises proportional ist.

In der Vergleichseinheit 23 erfolgt die Ermittlung einer Differenz zwischen dem dem ursprünglichen Sollwert des Kurzschlußwiderstandes des Schweißstromkreises proportionalen Signal und dem dem gesamten Istwert des Widerstandes der Elementarkontakte an den Stoßstellen der zu verschweißenden Werkstücke 1, 2 proportionalen Signal. Hierbei wird in Abhängigkeit vom Wert und dem Vorzeichen des resultierenden Signals, welches dem Widerstandswert proportional ist, der sich beim Vergleich des Istwertes des Gesamtwiderstandes der Elementarkontakte an den Stoßstellen der zu verschweißenden Werkstücke 1, 2 mit dem ursprünglichen Sollwert des Kurzschlußwiderstandes des Schweißstromkreises ergeben hat, in der Vergleichseinheit 23 ein Signal erzeugt, das an den Eingang des elektrohydraulischen Verstärkers 26 gelangt.

Der elektrohydraulische Verstärker 26 steuert den Betriebsölstrom proportional dem Steuersignal, das von der Vergleichseinheit 23 eintrifft, wobei je nach dem Vorzeichen des Steuersignals die zu verschweißenden Werkstücke 1, 2 mit einer dem Steuersignal proportionalen Geschwindigkeit zusammengeführt oder auseinandergerückt werden. Dieser Vorgang läuft bei der gesamten Dauer der Verschmelzung der Werkstücke 1, 2 ab.

Am Stauchbeginn werden von den Ausgängen der Befehlseinheit 31 folgende Befehle erteilt:

1) ein Befehl für den Eingang 33 der Speichereinheit 21, bei dessen Ankommen in der Speichereinheit 21 die Information über den ursprünglichen Sollwert des Kurzschlußwiderstandes des Schweißstromkreises gelöscht wird;

2) ein Befehl für den Eingang 35 der Differenziereinheit 34, bei dessen Ankommen die Differenziereinheit 34 zur Funktion kommt;

3) ein Befehl für den Eingang 32 der Divisionseinheit 27.

Beim Stauchen gelangt vom Stromwandler 16 ein dem Schweißstrom im Stauchvorgang proportionales Signal an die Eingänge 28 der Divisionseinheit 27. In die Eingänge 29 der Divisionseinheit 27 wird eine Spannung von der Sekundärwicklung des Schweißtransformators 11 eingespeist.

Ebenfalls vom Stromwandler 16 wird ein dem Schweißstrom im Stauchvorgang proportionales Signal den Eingän gen 36 der Differenziereinheit 34 zugeleitet. Hierbei findet in der Differenziereinheit 34 die Ermittlung einer zeitlichen Ableitung der Schweißstromgröße im Stauchvorgang statt, und sobald diese Ableitung gleich Null wird, was beim Erreichen einer Konstanten durch den Schweißstrom eintritt, gelangt vom Ausgang der Differenziereinheit 34 an den Eingang 37 der Divisionseinheit 27 ein Befehl zur Betätigung der Divisionseinheit 27.

Sobald an den Eingang 32 der Divisionseinheit 27 ein Befehl von der Befehlseinheit 31 und an den Eingang 37 ein Befehl von der Differenziereinheit 34 gelangt ist, erfolgt die Einschaltung der Divisionseinheit 27, in welcher dann ein präzisierter Wert für den Kurzschlußwiderstand des Schweißstromkreises durch Ermittlung des Quotienten beim Dividieren der Größe der zu überwachenden Spannung durch die Größe des zu überwachenden Stromes ermittelt wird.

Von der Divisionseinheit 27 gelangt ein dem präzisierten Kurzschlußwiderstandwert des Schweißstromkreises proportionales Signal an den Engang 30 der Speichereinheit 21, wo es gespeichert wird. Damit endet dieser Schweißzyklus. Das Abschmelzen der Werkstücke im folgenden Schweißzyklus vollzieht sich unter Berücksichtigung des besagten präzisierten Wertes des Kurzschlußwiderstandes, der die Änderungen des Schweißstromkreises unter Einwirkung der obig genannten Einflußgrößen beinhaltet. Bei jedem weiteren Schweißzyklus von Werkstücken aus gleicher Gruppe wird zur Steuerung des Abschmelzvorgangs der präzisierte Wert des Kurzschlußwiderstandes des Schweißstromkreises herangezogen, der beim Stauchen im vorhergehenden Schweißzyklus ermittelt wurde,

Somit wird bei der Ausführung des Verfahrens zur Abschmelzstumpfschweißung einer Gruppe von gleichen paarweise zu verschweißenden Werkstükken die Möglichkeit gegeben, Änderungen eines elektrischen Parameters, nämlich Änderungen des Kurzschlußwiderstandes im Schweiß stromkreise bei dessen Betrieb zu berücksichtigen und die Parameter des Schweißbetriebes zwecks besserer Stabilisierung des Abschmelzvorganges beim Abschmelzen der zu verschweißenden Werkstücke 1, 2 zu korrigieren. Als Folge hiervon wird die Effektivität bei der Erhitzung der zu verschweißenden Werkstücke beim Abschmelzen durch Verhinderung von Unterbrechungen des Schweißstromdurchflusses sowie von Kurzschlüssen der zu verschweißenden Werkstücke gesteigert. Hierbei verkürzt sich die Schweißzeit.

Ausführungsbeispiel des erfindungsgemäßen Verfahrens

Die Zweckmäßigkeit der Verwendung des Verfahrens zur Abschmelzstumpfschweißung einer Gruppe von gleichen paarweise zu verschweißenden Werkstücken wurde mittels einer Stumpfschweißmaschine überprüft.

Geschweißt wurden zwei Gruppen von runden Werkstücken aus kohlenstoffarmem Stahl mit einem Durchmesser von 90 mm.

Der Schweißbetrieb war der folgende:
- Sekundärspannung des Schweißtransformators: 7 bis 8V,
- Abschmelzzugabe: 15 mm,
Stauchzugabe: 100 mm.

Der bei der letzten Wartung gemessene Kurzschlußwiderstand des Schweißstromkreises belief sich auf $90 \bullet 10^{-6} \, \Omega$.

Die erste Gruppe der Probestücke wurde nach dem Verfahren gemäß dem Prototyp geschweißt.

Die zu verschweißenden Werkstücke wurden beim Abschmelzen bis auf die Erreichung eines Gesamtwiderstandes der Elementarkontakte an den Stoßstellen der zu verschweißenden Werkstücke von $40 \bullet 10^{-6} \, \Omega$ zusammengeführt, wonach sie auseinandergerückt wurden. Je nach dem Auseinanderrücken nahm der Gesamtwiderstand an den Stoßstellen der zu verschweißenden Werkstück zu, und nach dem Erreichen des Wertes $130 \bullet 10^{-6} \, \Omega$ wurden die Werkstücke wieder ein ander angenähert.

Die zu verschweißenden Werkstücke wurden so lange einander angeähert, bis der Gesamtwiderstand der Elementarkontakte an den Stoßstellen der zu verschweißenden Werkstücke einen Wert erreicht hat, der 0,45 von bei letzter Wartung gemessenen Kurzschlußwiderstand des Schweißstromkreises gleich ist. Danach wurden die Werkstücke auseinandergerückt, bis der Gesamtwiderstand der Elementarkontakte an den Stoßstellen der zu verschweißenden Werkstücke einen Wert erreicht hat, der 1,45 des bei dessen Wartung gemessenen Kurzschlußwiderstandes des Schweißstromkreises beträgt. Beim Schweißen der ersten Werkstücke aus einer Gruppe betrug die mittlere Schweißzeit 80 s. Bei der Aufzeichnung des Schweißstromes und der -spannung wurde festgestellt, daß gegen die Mitte der Arbeitsschicht unter den Betriebsbedingungen geringfügige Unterbrechungen des Stromdurchflusses, vorwiegend in der Anfangsstufe der Schweißung eintraten. Die Schweißzeit stieg auf 85 bis 95 s an. Die Güte de Schweißverbindungen war befriedigend.

Fur die Schweißung der zweiten Gruppe der Probstücke verwendete man das erfindungsgemäße Verfahren. Beim Schweißen des ersten Paares der Werkstücke 1, 2 einer Gruppe wurde in die manuelle Eingabeeinheit 20 ein bei der Wartung des Schweißstromkreises gemessene Wert dessen Kurzschlußwiderstandes von $90 \bullet 10^{-6} \, \Omega$ eingeführt.

Die zu verschweißenden Werkstücke 1, 2 wurden beim Abschmelzen so lange einander angenähert, bis der Gesamtwiderstand der Elementarkontakte an den Stoßstellen der zu verschweißenden Werkstücke 1, 2 einen Wert von $40 \bullet 10^{-6} \, \Omega$ erreicht hat, wonach die zu verschweißenden Werkstücke 1, 2 auseinandergerückt wurden. Je nach dem Auseinanderrücken der Werkstücke 1, 2 nahm de Gesamtwiderstand der Elementarkontakte an den Stoßstellen der zu verschweißenden Werkstücke 1, 2 zu, und nach Erreichen eines Wertes von $130 \bullet 10^{-6} \, \Omega$ wurden die Werkstücke 1, 2 wider einander angenähert.

Im Stauchvorgang ermittelte man den Wert des Kurzschlußwiderstandes des Schweißstromkreises.

Während der Schweißung der nachfolgenden Paare der Werkstücke 1, 2 aus der zweiten Gruppe wurden die Werkstücke 1, 2 erst dann auseinandergerückt, wenn der Gesamtwiderstand der Elementarkontakte an den Stoßstellen der zu verschweißenden Werkstücke 1, 2 einen Wert erreicht hat, der gleich einem Produkt aus dem präzisierten Wert des Kurzschlußwiderstandes des Schweißstromkreises, welcher beim Stauchen des vorhergehenden Paares der Werkstücke 1, 2 ermittelt war, und einem Koeffizienten von 0,45 war. Die Annäherung der Werkstücke 1, 2 erfolgte dann, wenn der Gesamtwiderstand der Elementarkontakte an den Stoßstellen der Werkstücke 1, 2 einen Wert erreicht hat, der gleich einem Produkt aus dem präzisierten Wert des Kurzschlußwiderstandes des Schweißstromkreises, den man beim Stauchen des vorhergehenden Paares der Werkstücke 1, 2 ermittelte, und einem Koeffizienten von 1,45 war.

Die Aufzeichnung der Abschmelzparameter hat ergeben, daß beim Schweißen unter Verwendung des geschilderten Verfahrens keine Unterbrechungen des Schweißstromdurchflusses eingetreten wa

ren. Beim Betreiben der Schweißmaschine beobachtete man eine Zunahme des Kurzschlußwiderstandes des Schweißstromkreises auf $115 \bullet 10^{-6}$ Ohm.

Die durchschnittliche Schweißzeit für die Werkstücke der zweiten Gruppe lag zwischen 75 und 80 s, wobei mit der Betriebsdauer der Schweißmaschine sich die Schweißzeit nicht verlängert hat. Die Güte der Schweißverbindungen war befriedigend.

Die Verwendung des Verfahrens zur Abschmelzstumpfschweißung einer Gruppe von gleichen paarweise zu verschweißenden Werkstücken ermöglicht es, die Abschmelzstabilität zu verbessern und damit die Schweißzeit um 10 % zu verkürzen, den Elektroenergieverbrauch zu senken und die energetischen Kennwerte des Schweißvorganges zu erhöhen.

Gewerbliche Anwendbarkeit

Es ist sinvoll, die Erfindung beim Schweißen von Schienen, großdimensionierten Rohren und Walzerzeugnissen mit großen Querschnitten anzuwenden.

**Ansprüche**

1. Verfahren zur Abschmelzstumpfschweißung einer Gruppe von gleichen paarweise zu verschweißenden Werkstücken, bei dem ein Paar der Werkstücke (1, 2) in einer Schweißmaschine unter Bildung eines Schweißstromkreises angeordnet, für das erste Paar der zu verschweißenden Werkstükke (1, 2) aus der Gruppe ein Sollwert für den Kurzschlußwiderstand des Schweißstromkreises vorgegeben, der Schweißstromkreis an eine Stromquelle angeschaltet und das Paar der zu verschweißenden Werkstücke abgeschmolzen, im Abschmelzvorgang des ersten Paares sowie der weiteren Paare der zu verschweißenden Werkstücke (1, 2) der Widerstand zwischen den zu verschweißenden Werkstücken (1, 2) ununterbrochen überwacht, der für das erste Paar der zu verschweißenden Werkstücke (1,2) geltende Istwert des Widerstandes zwischen den zu verschweißenden Werkstücken (1, 2) mit dem ursprünglich vorgebenenen Sollwert des Kurzschlußwiderstandes zur Aufrechterhaltung des erforderlichen Widerstandes zwischen den zu verschweissenden Werkstücken (1, 2) verglichen, im Abschmelzvorgang das erste Paar der zu verschweißenden Werkstücke (1, 2) je nach der Resultante des Widerstandes, die sich beim Vergleich des Istwertes des Widerstandes zwischen den zu verschweißenden Werkstücken (1, 2) mit dem ursprünglichen Sollwert des Kurzschlußwi

derstandes des Schweißstromkreises ergibt, zusammengeführt und auseinandergerückt und das Stauchen der zu verschweißenden Werkstücke (1, 2) vorgenommen wird, dadurch **gekennzeichnet,** daß die Schweißstromgröße im Stauchvorgang beim Verschweißen eines jeden Paares der Werkstücke überwacht, nach Erreichen eines konstanten Wertes durch den Schweißstrom ausgehend von diesem Stromwert sowie der gleichzeitig mit dem Schweißstrom gemessenen Spannung der Kurzschlußwiderstand aktualisiert, beim Verschweißen eines nachfolgenden Paares der zu verschweißen Werkstücke (1, 2) der Istwert des Widerstandes zwischen den zu verschweißenden Werkstücken (1, 2) mit dem beim Stauchen jedes vorhergehenden Paares der Werkstücke (1, 2) aktualisierten Kurzschlußwiderstand des Schweißstromkreises verglichen, beim Abschmelzen eines jeden Paares der zu verschweißenden Werkstück (1, 2) das Zusammenführen und Auseinanderrücken der zu verschweißenden Werkstücke (1, 2) je nach der Resultante des Widerstandes, die sich beim Vergleich des Istwertes des Widerstandes zwischen den zu verschweissenden Werkstücken (1, 2) mit dem in jedem vorhergehenden Schweißzyklus aktualisierten Kurzschlußwiderstand des Schweißstromkreises ergibt, vorgenommen wird.

# INTERNATIONAL SEARCH REPORT

International Application No PCT/SU 88/00178

**I. CLASSIFICATION OF SUBJECT MATTER** (if several classification symbols apply, indicate all) [6]

According to International Patent Classification (IPC) or to both National Classification and IPC

IPC[4]   B23K 11/04

**II. FIELDS SEARCHED**

Minimum Documentation Searched [7]

| Classification System | Classification Symbols · |
|---|---|
| IPC[4] | B23K 11/00, 11/04 |

Documentation Searched other than Minimum Documentation
to the Extent that such Documents are Included in the Fields Searched [8]

**III. DOCUMENTS CONSIDERED TO BE RELEVANT [9]**

| Category [*] | Citation of Document, [11] with indication, where appropriate, of the relevant passages [12] | Relevant to Claim No. [13] |
|---|---|---|
| A | SU, A1, 1042928 (Nauchno-proizvodstvennoe obiedinenie "ATOMKOTLOMASH") 23 September 1983 (23.09.83) see the claims | 1 |
| A | S.I. Kuchuk-Yatsenko et al." Kontaktnaya stykovaya svarka nepreryvnym oplavleniem", 1976, Naukova dumka, (Kiev)    see pages 58-62 (cited in the description) | 1 |
| A | GB, B, 1592075 (VSESOJUZNY NAUCHNO-ISSLEDO-VATELSKY INSTITUT PO STROITELSTVU MAGISTRALNYKH TRUBOPROVODOV) 1 July 1981 (01.07.81) see the claims | 1 |
|  | & DE, C2, 2752122 ; 05.01.83 CH, A5, 623496 , 15.06.81 | |
|  | & AT, A , 835477 , 15.12.82 FR, B1, 2371264, 04.04.80 | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 25 October 1988 (25.10.88) | 6 January 1989 (06.01.89) |
| International Searching Authority | Signature of Authorized Officer |
| ISA/SU | |

Form PCT/ISA/210 (second sheet) (January 1985)